Europäisches Patentamt

European Patent Office

Office européen des brevets

(19)

(11) EP 0 815 528 B1

## (12) FASCICULE DE BREVET EUROPEEN

(45) Date de publication et mention
de la délivrance du brevet:
**03.02.1999 Bulletin 1999/05**

(21) Numéro de dépôt: **96908167.8**

(22) Date de dépôt: **21.03.1996**

(51) Int Cl.⁶: **G06K 7/06**

(86) Numéro de dépôt international:
**PCT/FR96/00427**

(87) Numéro de publication internationale:
**WO 96/29671 (26.09.1996 Gazette 1996/43)**

(54) **CADRE DE LECTURE POUR APPAREIL LECTEUR DE CARTE A MICROCIRCUIT**

LESERRAHMEN FÜR IC-KARTENLESER

READING FRAME FOR A SMART CARD READER APPARATUS

(84) Etats contractants désignés:
**AT BE CH DE ES FR GB IT LI NL SE**

(30) Priorité: **22.03.1995 FR 9503347**

(43) Date de publication de la demande:
**07.01.1998 Bulletin 1998/02**

(73) Titulaire: **FRAMATOME CONNECTORS
INTERNATIONAL
92400 Courbevoie (FR)**

(72) Inventeur: **VALLAT, Bernard
F-34970 Lattes (FR)**

(74) Mandataire: **Keib, Gérard
NOVAMARK TECHNOLOGIES
Anciennement Brevets Rodhain & Porte
122, Rue Edouard Vaillant
92593 Levallois Perret Cedex (FR)**

(56) Documents cités:
**EP-A- 0 363 871          EP-A- 0 595 305**

## Description

L'invention concerne un cadre de lecture pour appareil de carte à microcircuit.

Dans le cadre de l'invention, on entend par "carte" toutes sortes de cartes du type incorporant un circuit intégré monolithique ou hybride, dit "puce". Ce terme "microcircuit" sera utilisé dans ce qui suit. Il s'agit par exemple, de carte de formant "carte de crédit", connue encore sous la dénomination "CAM" ("Carte à Mémoire"). Le plus souvent, le microcircuit est réalisé à base d'un microprocesseur ou d'un microcontrôleur, comprenant, notamment des circuits de mémoire, par exemple de type "PROM". Ce type de carte doit pouvoir être inséré dans des dispositifs spécifiques de lecture et/écriture de données. Pour simplifier ce dispositif sera appelé "lecteur" dans ce qui suit, étant bien entendu qu'il peut également assurer l'écriture de données et d'autres fonctions annexes (alimentation ou énergie électrique, tests) qui seront rappelées ci-après. Les données sont stockées dans les circuits mémoires précités, généralement sous forme cryptée. Elles sont donc lues à partir de positions mémoires ou au contraires écrites dans ces positions mémoires.

D'autres architectures logiques sont mises en oeuvre notamment pour des applications type "porte-monnaie électroniques" ou similaire.

Dans tous les cas, il existe des organes d'entrée-sortie constitués par des plages de contact, encore appelés "pads", affleurant en surface d'une des faces principales de la carte. Diverses normes définissent la position de ces plages de contact (ISO, AFNOR, etc.). Elles servent, non seulement pour des entrées-sorties de données précitées, mais aussi pour l'alimentation en énergie électrique du microcircuit ainsi que pour permettre d'effectuer diverses vérifications, selon les applications considérées (test de présence, etc...). Le lecteur comporte un cadre de lecture muni de contacts balais qui viennent en contact galvanique avec les plages précitées, lorsque la carte est correctement insérée dans ce cadre de lecture.

Divers besoins et tendances émergent actuellement, et parmi ceux-ci, les suivants :

- nécessité d'améliorer la sécurité de fonctionnement des appareils lecteurs de carte. Pour cela il est notamment nécessaire :

    1) d'assurer que la carte est correctement insérée avant d'effectuer la mise sous tension du microcircuit et de débuter la séquence de dialogue avec ce dernier.
    2) D'assurer une coupure rapide de l'alimentation de la carte en cas d'erreur de manipulation ou d'arrachement de la carte pour limiter les risques de détérioration des circuits et/ou tentation de fraude.

Dans ce but, les systèmes de lecture actuels comprennent un dispositif de détection d'insertion correcte de la carte qui utilise un contact fin de course dont la fermeture conditionne le démarrage des séquences électroniques d'initialisation et de lecture écriture qui sont gérées par l'électronique du lecteur et contrôlées par un microprocesseur de façon à respecter une chronologie définie pour laquelle le lecteur :

- effectue la mise sous tension du microcircuit,
- active les voies d'entrée sortie des données,
- active la voie d'horloge du microcircuit et,
- effectue une séquence d'initialisation du microcircuit.

Le microcircuit doit alors répondre à cette séquence d'initialisation de façon déterminée afin d'autoriser le dialogue entre le microcircuit de la carte et le microprocesseur du lecteur. Lors de la fin de dialogue, le microprocesseur effectue d'autre part une séquence de désactivation de la carte.

Il existe par railleurs des circuits spécialisés eux-mêmes à base de microcontrôleurs qui, d'une part prennent en charge ces séquences d'initialisation de dialogue et de fin de dialogue avec le microcircuit et, d'autre part effectuent une surveillance d'éventuelles surtensions ou court circuit sur la carte.

Il reste que dans le cas d'un arrachement de la carte, la mise hors tension et désactivation des différentes voies passe par :

    1) l'ouverture du contact présence carte,
    2) la détection par microprocesseur ou le microcontrôleur spécialisé de cette ouverture avant que la mise hors tension de la carte ne puisse effectivement être initialisée par une séquence d'opérations logiques.

Il a été déterminé que la vitesse d'arrachement de la carte peut atteindre lm par seconde. Ceci impose la réalisation d'un contact présence carte possédant une course inférieure à 0,1 mm si l'on veut garantir un temps de réaction inférieur à 100 $\mu$S compatible avec la réalisation de la séquence de désactivation d'urgence de la carte.

Un premier inconvénient est constitué par le fait que l'on constate souvent un manque de précision dans la position du contact fin de course notamment lorsque les contacts fin de course sont horizontaux ou bien montés sur un châssis indépendant du cadre de lecture.

Un deuxième inconvénient est que le temps de réaction du microprocesseur ou du microcontrôleur dépend de son programme interne et de la fréquence d'horloge qui gère son séquencement.

Les constatations suivantes ont été faites par la Demanderesse:

- la mise en place de la carte est supposée correcte lors de l'activation du contact fin de course;
- la séquence d'initialisation commence par la mise sous tension des balais d'alimentation de la carte;
- avant la mise sous tension et pendant la phase d'initialisation de la carte, le balai d'initialisation (voie de remise à zéro) est porté à un potentiel zéro logique;
- pendant la séquence d'initialisation, les balais de signaux sont dans un état dit "haute impédance".

En tirant partie de ces constatations, l'invention se vise pour but de réaliser un dispositif de détection de mauvais positionnement des plages de contact de la carte par rapport aux balais, applicable à une détection rapide de perte de contact entre les balais et les plages de contact de la carte.

On a décrit dans l'EP-A- 0 139 593 un appareil lecteur de carte à microcircuit comprenant:

- un connecteur comportant un corps supportant des éléments de contact balais destinés à être mis en contact électrique avec des plages conductrices associées audit microcircuit de la carte lorsque celle-ci est insérée dans le connecteur; et
- un circuit intégré comportant des moyens pour contrôler des opérations d'insertion ou de retrait de la carte dans le lecteur, ledit circuit étant relié, d'une part, avec au moins une partie desdits éléments de contact balais et, d'autre part, avec le circuit électronique du lecteur de carte.

Suivant l'invention, le système de lecture de carte à microcircuit comprenant un cadre de lecture pour appareil lecteur de carte à microcircuit comportant des éléments de contact balais primaires supportés par ledit cadre destinés à être mis en contact électrique avec des plages conductrices reliées à un microcircuit monté dans une carte lorsque celle-ci est insérée dans le cadre, au moins une partie des éléments de contact balais étant reliée à un circuit électronique comportant des moyens pour contrôler des opérations d'insertion ou de retrait de la carte dans le lecteur, ledit circuit étant relié, d'autre part, avec le circuit électronique du lecteur de carte, ledit connecteur étant caractérisé en ce qu'il comprend et porte ledit circuit électronique et en ce que le cadre de lecture comporte un contact balai supplémentaire, ledit contact détection coupure, décalé par rapport aux contacts balais primaires dans une direction d'introduction de la carte et destiné à être mis en contact électrique avec l'une des plages conductrices de la carte à microcircuit.

Le cadre de lecture conforme à l'invention comporte ainsi en combinaison, un circuit électronique tel que décrit dans la demande WO-A-96/24 111 ainsi qu'un contact balai supplémentaire, tel que décrit dans l'EP-A-0 595 305.

Selon un mode de réalisation avantageux, le cadre de lecture comporte des contacts balais primaires réalisant des contacts balais de signaux, un contact balai dit de masse, un contact balai dit d'alimentation.

Selon un mode de réalisation préféré, le contact détection coupure est susceptible d'être en contact électrique avec le contact balais d'alimentation au travers d'une des plages conductrices dite plage d'alimentation.

L'invention sera mieux comprise et d'autres caractéristiques et avantages apparaîtront à la lecture de la description qui suit en référence aux figures annexées et parmi lesquelles:

- la figure 1 est une vue en perspective, d'un cadre de lecture conforme à l'invention;
- la figure 2 illustre un premier exemple de carte à microcircuit, conforme à la norme ISO, montrant l'emplacement des contacts et leurs principales caractéristiques géométriques;
- la figure 3 illustre un premier exemple de carte à microcircuit, conforme à la norme AFNOR, montrant l'emplacement des contacts et leurs principales caractéristiques géométriques;
- la figure 4 illustre un premier exemple de carte à microcircuit, conforme à la norme ISO, comportant une particularité dans la configuration des contacts;
- les figures Sa et 5b illustrent un exemple de connecteur destiné à un lecteur de cartes à microcircuit selon l'Art Connu;
- la figure 6 illustre la disposition des éléments de contact dans un exemple de connecteur selon un premier mode de réalisation de l'invention;
- les figures 7a et 7b sont des figures de détail illustrant 1 fonctionnement d'un connecteur selon l'invention destiné à recevoir des cartes selon la norme ISO ;
- la figure 8 illustre l'électronique spécifique du lecteur de cartes, associée au connecteur selon l'invention ;

- la figure 9 illustre un exemple de réalisation d'un circuit électronique logique de coupure d'urgence selon l'invention ;
- les figures 10a et 10b illustrent une variante de réalisation du connecteur selon l'invention.

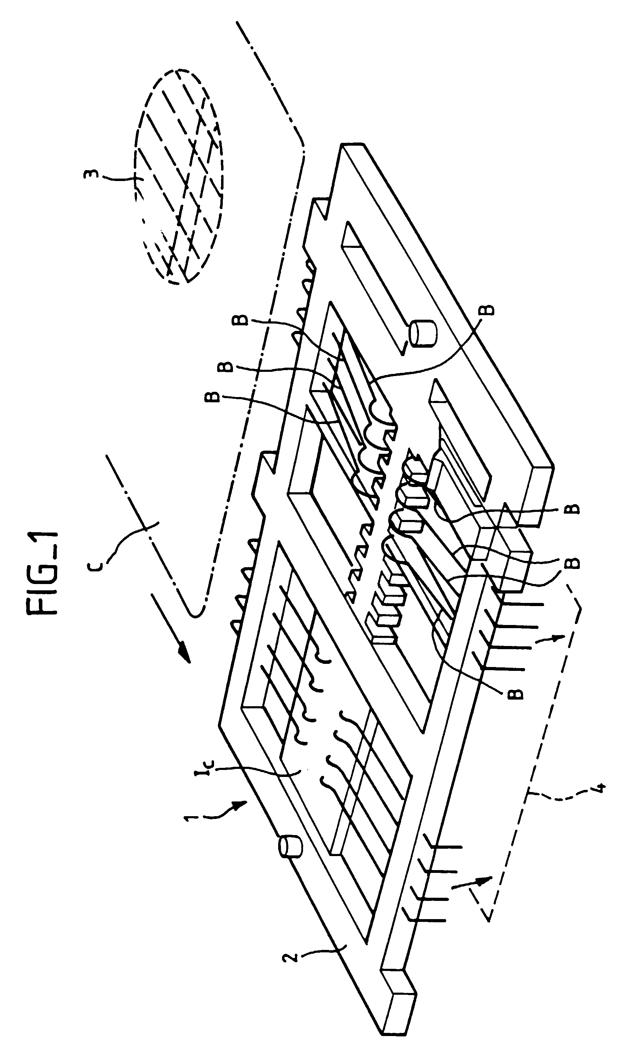

Dans la réalisation de la figure 1, le connecteur 1 pour appareil lecteur de carte C à microcircuit 3 comporte un corps 2 supportant des éléments de contacts balais B, destinés à être mis en contact électrique avec des plages conductrices associées audit microcircuit $I_c$ lorsque la carte C est insérée dans le connecteur.

Conformément à l'invention, ce connecteur 1 comporte un circuit électronique $I_c$ relié, d'une part, avec au moins une partie desdits éléments de contact balais $C_1$ à $C_8$ et, d'autre part, avec le circuit électronique 4 du lecteur de carte. Le circuit électronique $I_c$ porté par le connecteur 1 comporte des moyens qui sont détaillés dans la demande PCT n°FR 96/00156 pour contrôler des opérations d'insertion ou de retrait de la carte C dans le lecteur de carte.

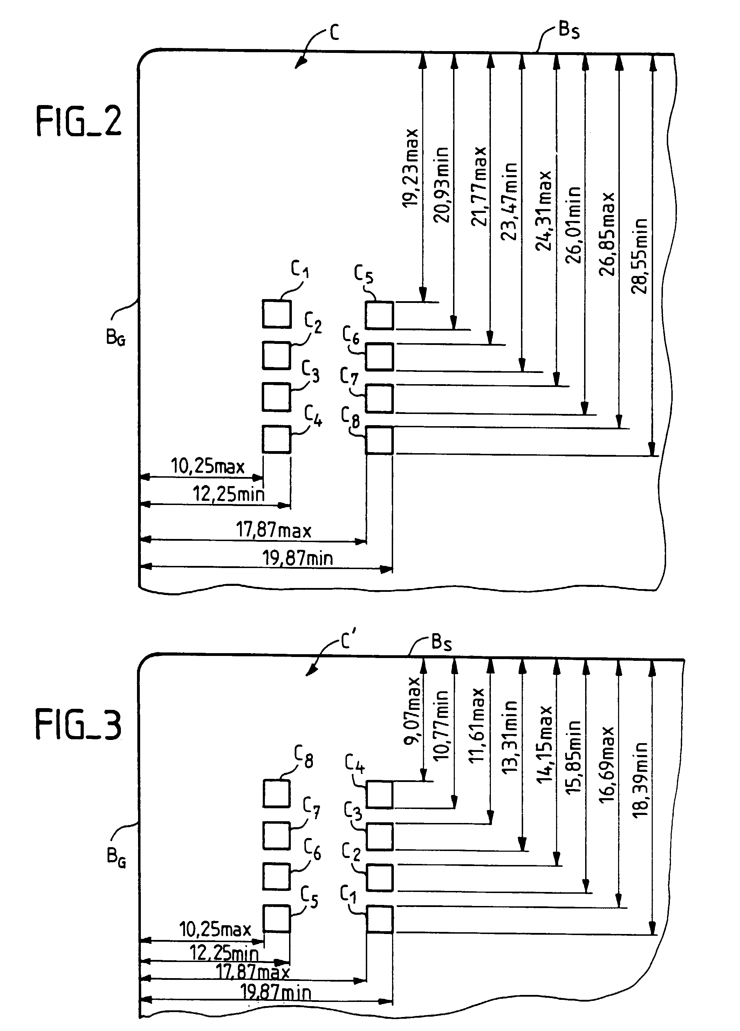

La figure 2 illustre un fragment de carte C conforme à la norme ISO 7816. Cette norme prescrit les dimensions, l'emplacement et l'affectation des plages de contacts $C_1$ à $C_8$, affleurant à la surface des cartes à microcircuit de type ID-1. La carte peut comprendre un ou plusieurs microcircuits. Les bornes d'entrées-sorties de ces microcircuits sont reliées à ces plages de contacts, $C_1$ à $C_8$.

Les plages de contacts, $C_1$ à $C_8$, sont organisées en deux rangées de quatre plages, respectivement $C_1$ à $C_4$ et $C_5$ à $C_8$, sensiblement parallèles entre elles et parallèles au bord gauche $B_G$ (sur la figure) de la carte C, bord servant de butée. La figure représente également le bord supérieur $B_S$ de la carte C. On a enfin porté, sur la figure 2, les principales caractéristiques géométriques définissant les contacts $C_1$ à $C_8$, exprimées en distances minimales et maximales (en mm) telles qu'elles ressortent de la norme précitée.

Il y a huit contacts, comme indiqué précédemment. Ceux-ci peuvent être situés sur le recto ou le verso de la carte C, mais les distances précitées sont définies par rapport au bord gauche $B_G$ et au bord supérieur $B_S$ de la carte C.

L'affectation des contacts est donnée par le tableau disposé en annexe de la présente description.

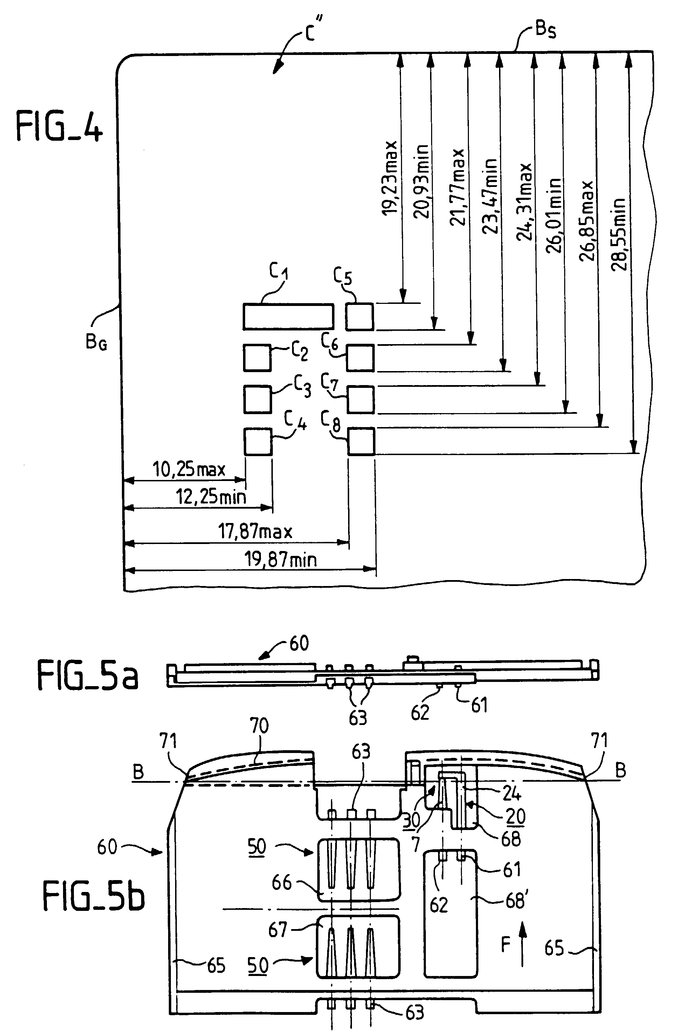

La figure 3 illustre un exemple de carte à microcircuit C conforme à la norme AFNOR, plus ancienne, dans les mêmes conditions de représentation de la carte C.

On constate les différences notables en ce qui concerne les distances entre les plages de contact, $C_1$ à $C_8$ et les bords gauche et supérieur précités. En outre, la localisation des plages de contacts est également différente. A titre d'exemple le contact $C_8$ dans le cas de la carte ISO, est à la place du contact $C_1$ dans le cas de la carte AFNOR.

Le connecteur utilisé dans le lecteur de carte doit tenir compte de la norme utilisée, cette contrainte étant commune aux connecteurs de l'Art connu.

Les figures 5a et 5b représentent, à titre d'exemple, un connecteur de l'Art connu, désigné sous la référence générale 60, vue en coupe BB et de haut, respectivement. Les éléments de contact formant balais, représentés sous la référence générale 50 et repliés en 63, sont disposés en deux rangées dans des lumières 66 et 67, respectivement, il comporte également une paire d'éléments de contacts 20-30, dits de détection de "fin de course", repliés en 61 et 62. Ces éléments 20 et 30 sont disposés dans une lumière 68 et leurs extrémités repliées dans la lumière 68'.

On remarque que pour une insertion d'une carte (non représentée) dans le sens de la flèche F, le rebord avant 70 (haut de la figure 5b), qui est incurvé, présente deux points extrêmes latéraux 71. Ces deux points 71 définissant une ligne de butée BB pour la carte, la région 24 de l'élément 20, située près de la ligne de butée BB est dotée d'un profil en forme de crosse. Lorsque la carte est insérée complètement dans le connecteur 60, elle repousse l'élément de contact 20, ce qui entraîne une mise en contact des deux éléments de contact 20 et 30 et une détection d'insertion complète de la carte ("fin de course") par des circuits électroniques appropriés du lecteur (non représentés) associés au connecteur 60.

Cette détection autorise l'alimentation effective en tension du balai associé à la plage $C_1$ de la carte C (voir figure 2, par exemple).

Selon l'invention, on ajoute un élément de contact balai supplémentaire du type "balai de détection coupure". Ce balai supplémentaire vient en parallèle avec le "balai de tension" normal, selon une configuration qui sera décrite ci-après. Ce balai supplémentaire est notamment décalé par rapport au balai normal.

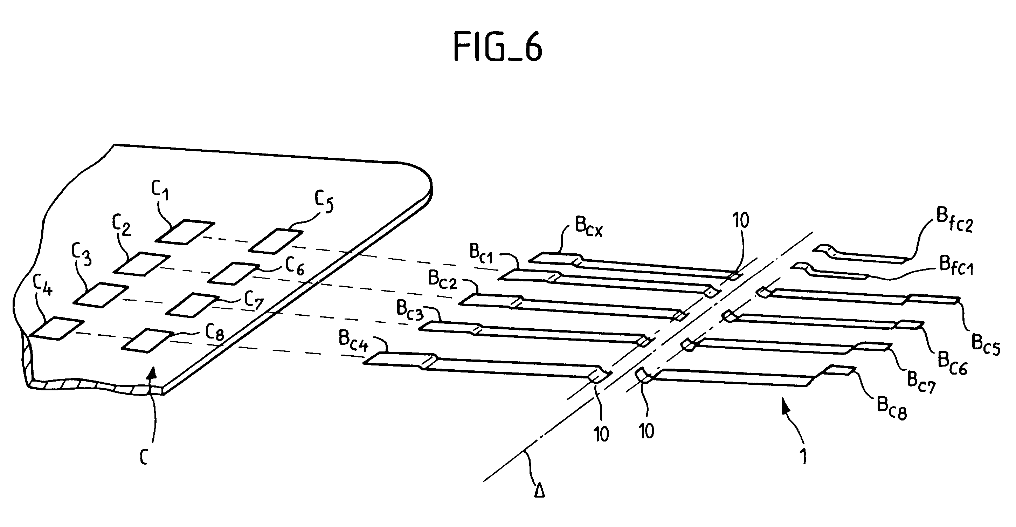

La figure 6 illustre schématiquement un connecteur 1 d'insertion de carte C selon l'invention. On a supposé, dans l'exemple décrit sur cette figure 6, que la carte $C_{arte}$ à insérer dans le connecteur 1 répond à la norme ISO précitée.

Pour plus de clarté, on n'a représenté, sur la figure 6, que les éléments de contact et leur disposition dans l'espace. les autres éléments : corps du connecteur et autres accessoires peuvent être entièrement communs aux connecteurs de l'Art connu, par exemple au connecteur représenté sur les figures 5a et 5b.

De façon connue en soi, le connecteur 1 comprend deux rangées d'éléments de contact, formant balais, respectivement $B_{C1}$-$B_{C4}$ et $B_{C5}$-$B_{C8}$, quatre dans chaque rangée, chacun de ces balais est destiné à être mise en contact galvanique avec une plage correspondante $C_1$ à $C_8$, de la carte C. Ils jouent le rôle des éléments de contact 50 de la figure 5a.

De façon également connue en soi, il peut être prévu sur le cadre de lecture ou une paire d'éléments de contacts $B_{Fc1}$ et $B_{Fc2}$, dits de "fin de course", destinés à détecter l'insertion complète et correcte de la carte C dans le

4

connecteur 1.

Comme le montre le figure 6, les balais $B_{C1}$-$B_{C4}$ et $B_{C5}$-$B_{C8}$, sont constitués de lames métalliques, minces et souples, dont les extrémités distales 10 ont la forme d'une crosse. Ces lames sont parallèles entre elles et les extrémités distales précitées sont disposées en vis-à-vis, deux par deux, de part et d'autre d'un axe de symétrie A perpendiculaire aux lames.

Selon une caractéristique essentielle de l'invention, on prévoit un élément de contact supplémentaire, référencé $B_{CX}$, doublant l'élément de contact $B_{C1}$, de type "balai de détection coupure". Cet élément de contact supplémentaire $B_{CX}$ peut d'ailleurs être découpé (au moment de la fabrication du connecteur) dans la même bande que les contacts normaux et surmoulé en même temps qu'eux dans le corps de connecteur (voir figure 5b). Il sera avantageux, dans ce cas, de rétrécir la largeur d'une lame et d'en ajouter un cinquième à côté.

Dans tous les cas, cet élément de contact supplémentaire $B_{CX}$ permet de détecter le retrait de la carte C et, donc, d'activer ou de désactiver la carte à microcircuit, de la manière qui sera explicité ci-après.

Toujours dans le cas d'une carte C répondant à la norme ISO, la figure 7a illustre la position des éléments de contact balais $B_{C1}$ et $B_{CX}$, par rapport à la plage $C_1$, en position de travail normal, c'est-à-dire carte C correctement introduite dans le connecteur 1. Dans ce cas, l'élément de contact balai $B_{CX}$ est en retrait (par rapport au centre de la carte) du contact balai $B_{C1}$, mais sur la plage $C_1$. La carte C est bloquée contre une butée b.

Dans cet état de travail normal, l'élément de contact balai $B_{C1}$ est alimenté par la tension d'alimentation $V_{CC}$ soit généralement + 5V. La plage $C_1$ est alors également portée à ce potentiel. Le contact supplémentaire $B_{CX}$ "lit" la tension d'alimentation $V_{CC}$ de la carte et inhibe la logique de coupure ce qui permet le démarrage des séquences d'initialisation et de lecture de la carte et valide l'alimentation en énergie électrique du microcircuit de la carte. Les opérations de lecture et/ou lecture peuvent se dérouler normalement.

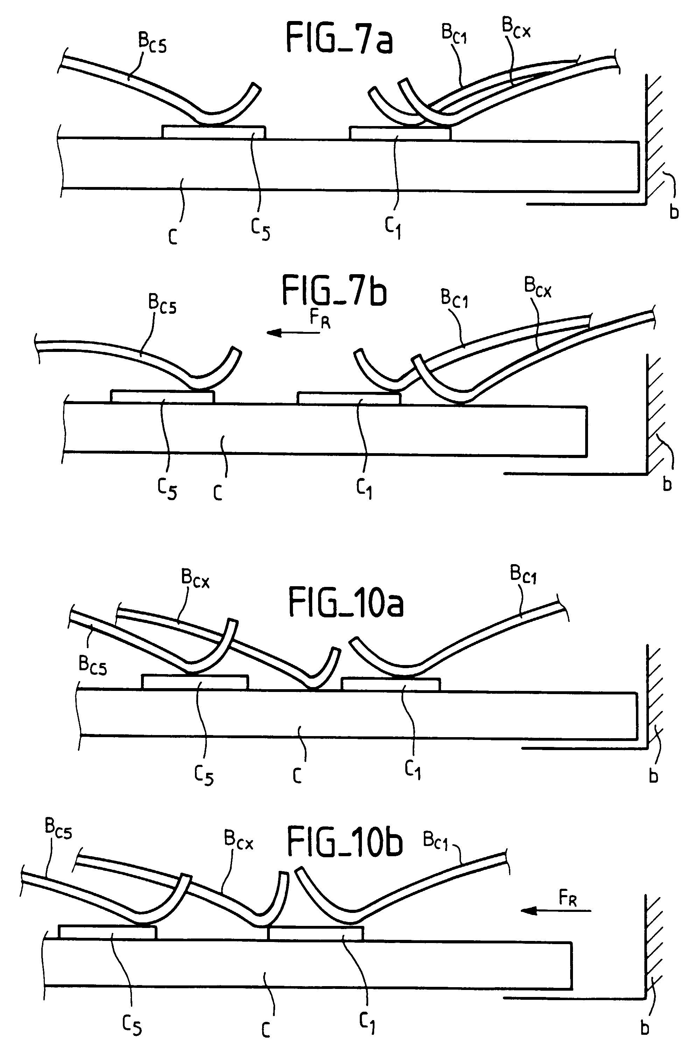

Si la carte est retirée normalement ou "arrachée", la plage CI va subir une translation selon la flèche $F_R$ et l'élément de contact balai $B_{CX}$ va sortir le premier de celle-ci. Cette situation est illustrée par la figure 7b.

La tension "lue" cet élément de contact balai supplémentaire $B_{CX}$ disparaît selon une transition niveau haut, niveau bas ce qui active le circuit électronique logique de coupure d'urgence.

Par contre, les autres éléments de contacts $B_{C2}$ à $B_{C8}$ n'ont pas encore eu le temps de sortir de leurs plages respectives $C_2$ à $C_8$.

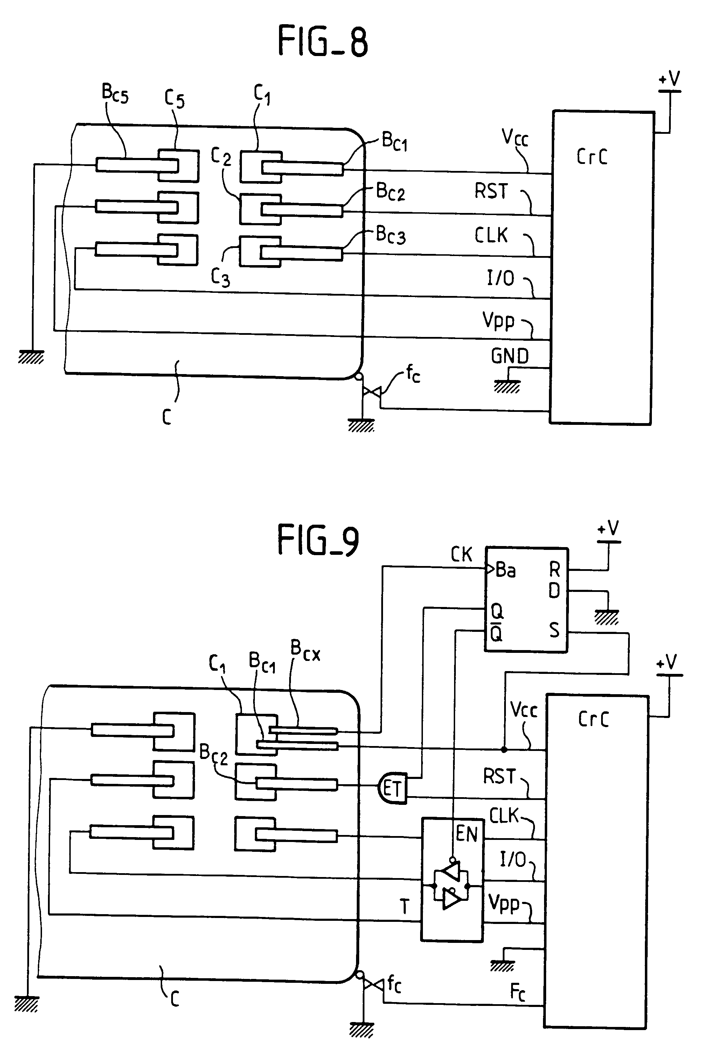

La figure 8 illustre schématiquement, sous la forme d'un schéma bloc un dispositif lecteur de carte selon le format ISO à 6 contacts selon l'art antérieur. Selon ce dispositif, un contact fin de course $f_c$ est relié au circuit de contrôle CrC du lecteur de carte. Dès la détection de la fermeture de ce contact, le circuit de contrôle établit l'alimentation $V_{CC}$ de la carte au travers du contact balai $B_{C1}$ et démarre la séquence d'initialisation des procédures de dialogue entre le lecteur et la carte, notamment en désactivant l'entrée en remise à zéro RST de la carte, en établissant l'horloge CK de la carte et en activant les lignes d'entrées / sorties I./O de dialogue entre la carte et le lecteur, ceci au travers des contacts balais correspondants respectifs de la carte.

La figure 9 décrit un exemple de réalisation simplifiée d'un circuit électronique logique de coupure d'urgence utilisant le contact supplémentaire $B_{CX}$ de façon à permettre de stopper instantanément le dialogue entre le lecteur de carte et la carte. Pour cela, le signal issu de la broche $V_{CC}$ du circuit de contrôle est relié à l'entrée SET "S" d'une bascule bistable Ba. L'entrée horloge CK, de la bascule Ba, active sur une transition niveau haut vers niveau bas, est reliée au contact $B_{CX}$. L'entrée D de la bascule Ba est portée à un niveau zéro logique. La sortie inverseuse Q est reliée à l'entrée de validation EN d'un circuit tampon par lequel transitent dans l'exemple considéré les voies d'horloge, d'entrées / sorties et de programmation Vpp de la carte. La sortie inverseuse Qde la bascule Ba, combinée avec la sortie RST du circuit de contrôle au travers d'une porte ET, est reliée au balai d'initialisation (remise à zéro) de la carte et en contact avec la plage $B_{C2}$.

Le fonctionnement de ce dispositif est le suivant :

Lors de l'introduction de la carte, le contact fin de course $f_c$ se ferme et, comme dans les dispositifs de l'art antérieur, cette fermeture détectée par le circuit de contrôle CrC du lecteur de carte valide l'alimentation $V_{CC}$ de la carte. Selon l'invention, cette fermeture enclenche alors le dispositif de coupure d'urgence en positionnant la bascule Ba dans un état d'attente d'une transition descendante du signal issu du contact supplémentaire $B_{CX}$.

En effet, sur détection de contact fin de course $f_c$, le circuit de contrôle effectue l'alimentation de la carte ce qui provoque l'apparition d'un niveau logique "1" sur l'entrée SET "S" de la bascule Ba. La bascule Ba passe alors d'un état, où sa sortie inverseuse Q est à un niveau logique "1", indépendant de l'état de son entrée d'horloge CK, à un état d'attente d'un front d'horloge CK descendant.

Le dispositif de coupure est donc enclenché mais reste transparent vis-à-vis des signaux RST, CLK et I/O, car les sorties "Q" et "$\overline{Q}$" de la bascule Ba restent dans un état autorisant le passage de ces signaux au travers de la porte ET, pour le signal RST, et au travers du circuit tampon T, pour les signaux CLK et I/O.

Lors d'un arrachement de la carte, le balai $B_{CX}$ sort de la plage $C_1$ et ne lit plus la tension $V_{CC}$ ceci cause une transition niveau haut niveau bas au niveau de la bascule Ba et la sortie Q prend alors la valeur "0", lue à son entrée D, réalisant les événements suivants :

- la sortie de la porte ET passe alors à "0" déclenchant une remise à zéro "RESET" de la carte $C_{arte}$ à microcircuit,
- les balais du lecteur véhiculant les signaux CLK et I/O sont désactivés, par inhibition du circuit tampon T.

Ce dispositif logique de coupure d'urgence assure ainsi une protection des voies d'entrée-sortie de la carte jusqu'à détection par le circuit de contrôle d'un défaut et coupure de l'alimentation $V_{CC}$ et la désactivation normale de la carte à microcircuit.

Bien entendu, ce dispositif, décrit de façon simplifiée, peut comporter des améliorations, notamment des dispositifs de protection contre les surtensions, dispositifs anti-rebonds ou autres, à la portée de l'homme du métier, et peut, notamment, comporter une bascule complémentaire de coupure de la tension $V_{CC}$ ou comporter une liaison complémentaire de détection d'erreur reliée au circuit de contrôle CrC.

Il est également possible, sans sortir du cadre de l'invention, de positionner le contact balai supplémentaire en avant (par rapport au centre de la carte) de la plage $V_{CC}$, mais de plus hors de la plage $V_{CC}$, comme illustré sur les figures 10a et 10b. Un arrachement de la carte cause alors la mise en contact, au travers de la plage $C_1$, du contact balai d'alimentation $B_{C1}$ et du contact balai supplémentaire $B_{CX}$, ce qui générera un front montant qu'il suffit d'inverser pour obtenir un fonctionnement identique du dispositif de détection.

Naturellement, pour que l'invention puisse produire ses effets, il est nécessaire qu'un certain nombre d'exigences soient remplies. Elles tiennent essentiellement à un respect de tolérances sur la réalisation et le positionnement dans le connecteur de l'élément de contact $B_{C1}$ par rapport à la plage $C_1$, lorsque la carte C est en butée et le décalage entre l'élément de contact normal $B_{C1}$ et l'élément de contact supplémentaire $B_{CX}$.

Notamment, pour fixer les idées, le centre de la plage $C_1$ est à une distance égale à 18,87 mm de la butée de carte b, avec une tolérance +0,4 mm maxi et -0,5 mm maxi. Comme il a été indiqué, la largeur de la plage $C_1$, selon une direction parallèle à $F_R$, est de 2 mm mini et la distance séparant une plage contiguë à $C_1$ et C1 est de 0,2mm.

En ce qui concerne la précision, dans le cas d'un connecteur selon l'art connu, muni d'éléments de contact du type "fin de course", la garantie d'un bon séquencement est tributaire :

- de la précision mécanique des éléments de contact précités ;
- de la position absolue des plages de contacts par rapport au bord de celle-ci ;
- de la position des éléments de contacts balais par rapport aux éléments de contact de type "fin de course".

Dans le cas d'un connecteur selon l'invention, la précision dépend uniquement :

- du décalage voulu des éléments de contact balai, obtenu par un outil de découpe-cambrage des balais ;
- et de la précision dans la largeur des plages de contact.

La précision globale obtenue est meilleure que celle obtenue avec l'aide des seuls éléments de contact de type "fin de course".

**ANNEXE**

| Contact N° | Dénomination et affectation des contacts |
|------------|------------------------------------------|
| $C_1$ | VCC (Tension d'alimentation) |
| $C_2$ | RST (Signal de remise à zéro) |
| $C_3$ | CLK (Signal d'horloge) |
| $C_4$ | Réservé pour un usage futur |
| $C_5$ | GND (Masse) |
| $C_6$ | VPP (Tension de programmation) |
| $C_7$ | I/O (Données entrées/sorties) |
| $C_8$ | Réservé pour un usage futur |

**Revendications**

1.  Système de lecture de carte à microcircuit comprenant un cadre de lecture (1) pour appareil lecteur de carte (C) à microcircuit comportant des éléments de contact balais primaires (B) supportés par ledit cadre (1) et destinés à être mis en contact électrique avec des plages conductrices reliées à un microcircuit monté dans une carte (C) lorsque celle-ci est insérée dans le cadre (1), au moins une partie des éléments de contact balais (B) étant reliée à un circuit électronique (Ic) comportant des moyens pour contrôler des opérations d'insertion ou de retrait de la carte (C) dans le lecteur, ledit circuit (Ic) étant relié, d'autre part, avec le circuit électronique (4) du lecteur de carte, ledit connecteur étant caractérisé en ce qu'il comprend et porte ledit circuit électronique (Ic) et en ce que le cadre de lecture comporte un contact balai supplémentaire (Bcx), dit contact détection coupure, décalé par rapport aux contacts balais primaires dans une direction d'introduction (Fr) de la carte (C) et destiné à être mis en contact électrique avec l'une des plages conductrices (C1-C8) de la carte (C) à microcircuit.

2.  Système de lecture selon la revendication 1, caractérisé en ce que les contacts balais primaires comprenant des contacts balais de signaux ($B_{c2}$-$B_{c4}$, $B_{c6}$-$B_{c8}$), un contact balai ($B_{c5}$) dit de masse, un contact balai ($B_{c1}$) dit d'alimentation, destinés à être en contact respectivement avec des plages conductrices ($C_2$-$C_4$, $C_6$-$C_8$) dites de signaux, une plage conductrice dite de masse ($C_5$) et une plage conductrice ($C_1$) dite d'alimentation de la carte (C) à microcircuit.

3.  Système de lecture selon l'une des revendications 1 ou 2, caractérisé en ce que ledit contact détection coupure ($B_{cx}$) est susceptible d'être en contact électrique avec l'un des contacts balais primaires ($B_{c1}$) au travers de la plage conductrice ($C_1$) correspondante à ce contact balai primaire ($B_{c1}$) de la carte (C) à microcircuit.

4.  Système de lecture selon la revendication 3, caractérisé en ce que ledit contact détection coupure ($B_{cx}$) est susceptible d'être en contact électrique avec le contact balai ($B_{c1}$) dit d'alimentation au travers de ladite plage conductrice d'alimentation ($C_1$) de la carte à microcircuit lorsque la carte (C) à microcircuit est en butée (b) dans le cadre de lecture.

5.  Système de lecture selon la revendication 3, caractérisé en ce que ledit contact détection coupure ($B_{cx}$) est susceptible d'être en contact électrique avec le contact balais ($B_{c1}$) dit d'alimentation au travers de ladite plage conductrice d'alimentation ($C_1$) de la carte (C) à microcircuit lorsque la carte à microcircuit (C) n'est pas en butée (b) dans le cadre de lecture.

6.  Système de lecture selon l'une des revendications précédentes, caractérisé en ce que ledit contact détection coupure ($B_{cx}$) constitue un signal de déclenchement relié à un dispositif électronique dit de coupure d'urgence.

**Patentansprüche**

1.  Lesesystem einer Karte mit Mikroschaltung, das einen Leserahmen (1) für eine Lesevorrichtung einer Karte (C) mit Mikroschaltung aufweist, die erste durch den Rahmen getragene Kontaktarmelemente (B) aufweist, die in elektrischen Kontakt mit leitenden Bereichen gebracht werden, die mit einer auf einer Karte (C) befestigten Mikroschaltung verbunden sind, wenn die Karte in den Rahmen eingeführt wird, wobei wenigstens ein Teil der Kontaktarmelemente (B) an eine elektrische Schaltung (Ic) angeschlossen ist, die Mittel zur Steuerung der Einführ- oder Entnahmeoperation der Karte im Lesegerät aufweist, wobei die Schaltung (Ic) andererseits mit der elektrischen Schaltung (4) des Kartenlesers verbunden ist, wobei der Verbinder dadurch **gekennzeichnet** ist, daß er die elektrische Schaltung (Ic) aufweist und trägt und dadurch, daß der Leserahmen einen zusätzlichen Kontaktarm (Bcx) aufweist, der Kontakt zur Detektion der Unterbrechung genannt wird und gegenüber den ersten Kontaktarmen in eine Einführungsrichtung (Fr) der Karte (C) versetzt ist und in elektrischen Kontakt mit einem der leitenden Bereiche (C1-C8) de Karte (C) mit Mikroschaltung gebracht wird.

2.  Lesesystem nach Anspruch 1, dadurch **gekennzeichnet,** daß die ersten Kontaktarme (B) Signalkontaktarme (Bc2-BC4, BC6-BC8), einen Masse genannter Kontaktarm ($B_{C5}$), einen Versorgung genannter Kontaktarm ($C_{C1}$) aufweisen, die jeweils mit den Signal genannten Kontaktbereichen ($C_2$-$C_4$, $C_6$-$C_8$), einem Masse genannten leitenden Kontaktbereich ($C_5$) und einem Versorgung genannten leitenden Kontaktbereich ($C_1$) der Karte (C) mit Mikroschaltung in Kontakt gebracht werden.

3.  Lesesystem nach einem der Ansprüche 1 oder 2, dadurch **gekennzeichnet,** daß der Kontakt zur Detektion der Unterbrechung ($B_{cx}$) mit einem der ersten Kontaktbereiche ($B_{C1}$) durch den leitenden Bereich ($C_1$) in elektrischem Kontakt ist, der dem ersten Kontaktarmbereich ($B_{C1}$) der Karte (C) mit Mikroschaltung entspricht.

4. Lesesystem nach Anspruch 3, dadurch **gekennzeichnet,** daß der Kontakt zur Detektion der Unterbrechung ($B_{cx}$) mit dem Versorgung genannten Kontaktarm ($B_{C1}$) durch den leitenden Versorgungsbereich ($C_1$) der Karte (C) mit Mikroschaltung in elektrischem Kontakt ist, wenn die Karte mit Mikroschaltung am Anschlag (b) des Leserahmens anliegt.

5. Lesesystem nach Anspruch 3, dadurch **gekennzeichnet,** daß der Kontakt zur Detektion der Unterbrechung ($B_{cx}$) mit dem Versorgung genannten Kontaktarm ($B_{C1}$) durch den leitenden Versorgungsbereich ($C_1$) der Karte (C) mit Mikroschaltung in elektrischem Kontakt ist, wenn die Karte mit Mikroschaltung (C) nicht am Anschlag (b) des Leserahmens anliegt.

6. Lesesystem nach einem der vorherigen Ansprüche, dadurch **gekennzeichnet,** daß der Kontakt zur Detektion der Unterbrechung ($B_{cx}$) aus einem Auslösesignal besteht, das an eine elektronische Vorrichtung angeschlossen ist, die Notunterbrechung genannt wird.

## Claims

1. Smartcard reading system comprising a reading frame (1) for a smartcard (C) reading apparatus comprising primary brush contact elements (B) supported by the said frame (1) and intended to be placed in electrical contact with conducting pads linked to a microcircuit mounted in a card (C) when the latter is inserted into the frame (1), at least some of the brush contact elements (B) being linked to an electronic circuit (Ic) comprising means for controlling operations for inserting the card (C) into or removing it from the reader, the said circuit (Ic) being linked, furthermore, with the electronic circuit (4) of the card reader, the said connector being characterized in that it comprises and carries the said electronic circuit (Ic) and in that the reading frame comprises an additional brush contact (Bcx), the so-called cutoff detection contact, which is offset with respect to the primary brush contacts in a direction of insertion (Fr) of the card (C) and intended to be placed in electrical contact with one of the conducting pads (C1-C8) of the smartcard (C).

2. Reading system according to Claim 1, characterized in that the primary brush contacts (B) comprises brush contacts for signals ($B_{c2}$-$B_{c4}$, $B_{c6}$-$B_{c8}$), a so-called earth brush contact ($B_{c5}$), and a so-called supply brush contact ($B_{c1}$), which are intended to be in contact respectively with so-called signal conducting pads ($C_1$-$C_4$, $C_6$-$C_8$), a so-called earth conducting pad (C5) and a so-called supply conducting pad ($C_1$) of the smartcard (C).

3. Reading system according to one of Claims 1 or 2, characterized in that the said cutoff detection contact ($B_{cx}$) is able to be in electrical contact with one of the primary brush contacts ($B_{c1}$) across the conducting pad ($C_1$) corresponding to this primary brush contact ($B_{c1}$) of the smartcard (C).

4. Reading system according to Claim 3, characterized in that the said cutoff detection contact ($B_{cx}$) is able to be in electrical contact with the so-called supply brush contact ($B_{c1}$) across the said supply conducting pad ($C_1$) of the smartcard when the smartcard (C) is in abutment (b) in the reading frame.

5. Reading system according to Claim 3, characterized in that the said cutoff detection contact ($B_{cx}$) is able to be in electrical contact with the so-called supply brush contact ($B_{c1}$) across the said supply conducting pad ($C_1$) of the smartcard (C) when the smartcard (C) is not in abutment (b) in the reading frame.

6. Reading system according to one of the preceding claims, characterized in that the said cutoff detection contact ($B_{cx}$) constitutes a trip signal linked to a so-called emergency cutoff electronic device.

FIG_1

EP 0 815 528 B1

FIG_2

FIG_3

FIG_4

$C''$

$B_S$

$B_G$

$C_1$
$C_2$
$C_3$
$C_4$
$C_5$
$C_6$
$C_7$
$C_8$

19,23max
20,93min
21,77max
23,47min
24,31max
26,01min
26,85max
28,55min

10,25max
12,25min
17,87max
19,87min

FIG_5a

60

63  62  61

FIG_5b

70
71        71
B        B

24
30      20
7       68

60
50
66
67
50
65

61
62
68'

F      65

63

# FIG_6

EP 0 815 528 B1

## FIG_7a

## FIG_7b

## FIG_10a

## FIG_10b

# FIG_8

# FIG_9